# EUROPÄISCHE PATENTSCHRIFT

(11) **EP 3 094 861 B1**
(45) Veröffentlichungstag und Bekanntmachung des Hinweises auf die Patenterteilung: **27.11.2019**
(21) Anmeldenummer: 14820810.1
(22) Anmeldetag: 15.12.2014
(51) Int. Cl.: F03D 13/00, F03D 15/00, F16H 57/04

(54) **ANSCHLUSSSTÜCK FÜR EIN PITCHROHR**
CONNECTION PIECE FOR A PITCH TUBE
RACCORD POUR UN TUBE DE CONDUITS

(30) Priorität: 16.01.2014 DE 102014200674
(43) Veröffentlichungstag der Anmeldung: 23.11.2016
(73) Patentinhaber: ZF Friedrichshafen AG, 88046 Friedrichshafen (DE); ZF Wind Power Antwerpen NV, 3920 Lommel (BE)
(72) Erfinder: SMET, Wim, B-9140 Temse (BE)
(86) Internationale Anmeldenummer: PCT/EP2014/077702
(87) Internationale Veröffentlichungsnummer: WO 2015/106898

(56) Entgegenhaltungen:
- DE-A1-102010 060 147

## Beschreibung

Die Erfindung betrifft ein Anschlussstück für ein Pitchrohr einer Windkraftanlage nach dem Oberbegriff von Anspruch 1.

Mit Pitchrohr wird in Fachkreisen ein Leitungsrohr in einer Windkraftanlage bezeichnet, wobei mindestens ein Teil des Leitungsrohrs mindestens teilweise durch eine Rotorwelle der Windkraftanlage verläuft. Die Rotorwelle verbindet einen Rotor, aufweisend eine Rotornabe und vom Wind angetriebene Rotorblätter, drehfest - mit einer Eingangswelle eines Getriebes. Das Pitchrohr verläuft koaxial zu der Drehachse der Rotorwelle beziehungsweise des Rotors, das heißt das Pitchrohr ist rotationssymmetrisch mit einer Rotationsachse, die entlang der Drehachse der Rotorwelle beziehungsweise des Rotors verläuft, also identisch mit der Drehachse der Rotorwelle beziehungsweise des Rotors ist.

Um eine Blatteinstellwinkelregelung (Pitchregelung) vornehmen zu können, sind elektrische Leitungen erforderlich, die zwischen dem Rotor und einem generatorseitigen Anschluss verlaufen. Das Pitchrohr dient unter anderem dazu, diese Leitungen durch die Rotorwelle zu verlegen.

Auch ist es möglich, das Pitchrohr zur Ölversorgung eines Getriebes der Windkraftanlage zu verwenden. So schlägt die Druckschrift DE 10 2011 119 471 A1 ein doppelwandiges Pitchrohr mit einem äußeren und einem inneren Rohr vor. Der zwischen dem inneren und dem äußeren Rohr gebildete Hohlraum dient dabei der Zuführung von Schmierstoff zu dem Getriebe. Die elektrischen Leitungen verlaufen durch das innere Rohr.

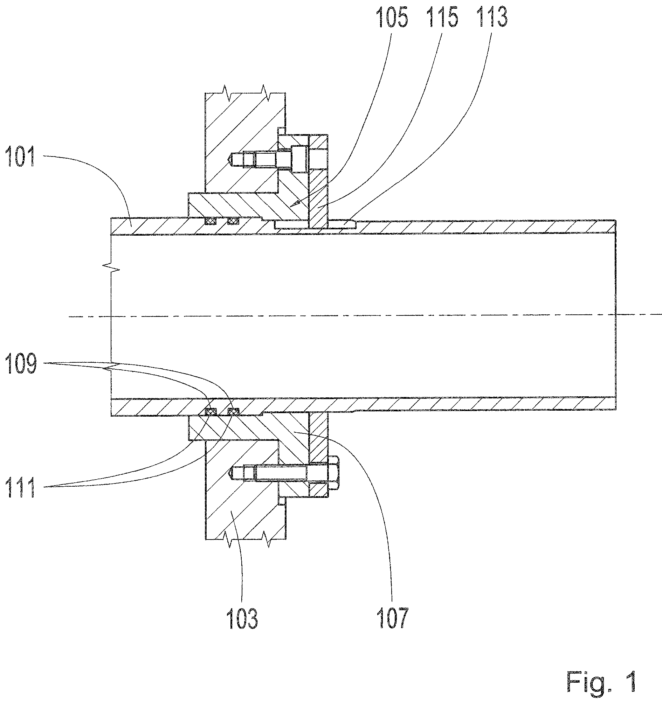

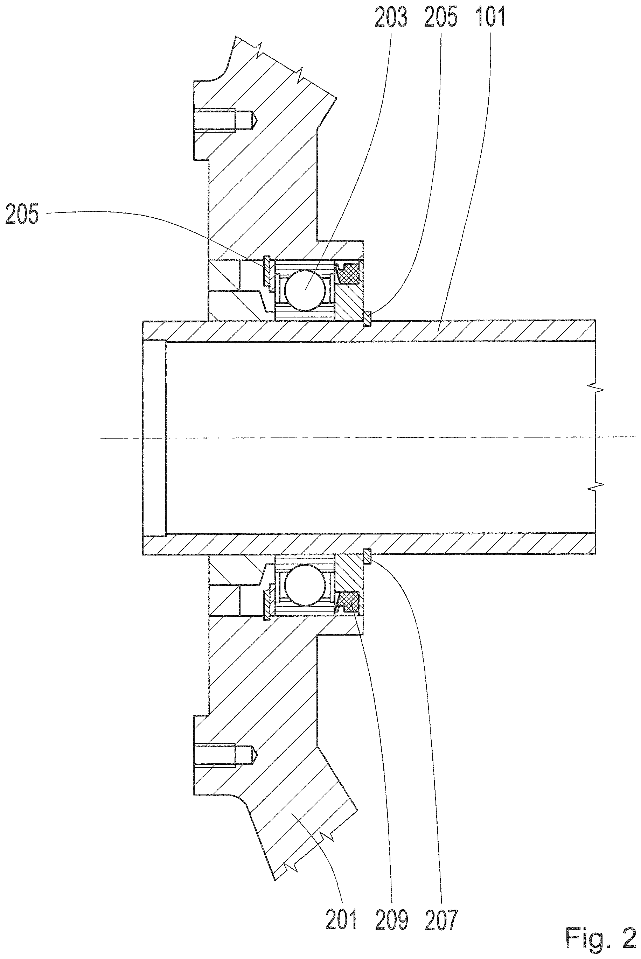

Die Fig. 1 und 2 zeigen eine aus dem Stand der Technik bekannte Lösung zur Integration eines Pitchrohrs 101 in ein Getriebe einer Windkraftanlage. Fig. 1 stellt eine rotorseitige Befestigung des Pitchrohrs 101 dar. Das Pitchrohr 101 wird durch eine Öffnung in einem von dem Rotor angetriebenen Planetenträger 103 hindurchgeführt.

Zur Kopplung des Pitchrohrs 101 mit dem Planetenträger 103 ist ein Anschlussstück 105 vorgesehen. Dieses weist einen Flansch 107 auf, der mit dem Planetenträger 103 verschraubt ist. Um zu verhindern, dass zwischen dem Pitchrohr und dem Anschlussstück 105 Öl aus dem Getriebe austreten kann, ist das Pitchrohr 101 mit zwei umlaufenden Nuten 109 versehen, in die jeweils ein O-Ring 111 eingesetzt ist. Die O-Ringe 111 dichten das Pitchrohr 101 gegenüber dem Anschlussstück 105 ab. Weiterhin ist das Pitchrohr 101 mit einer schlitzförmigen Aussparung 113 versehen. In diese greift eine Sicherungslasche 115 ein, dass an dem Anschlussstück 105 angebracht ist. Dadurch kommt eine drehfeste Verbindung zwischen dem Pitchrohr 101 und dem Anschlussstück 105 zustande. Insbesondere sind auch das Pitchrohr 101 und der Planetenträger 103 drehfest verbunden. Das Pitchrohr 101 dreht sich also mit dem Rotor.

Fig. 2 zeigt das dem in Fig. 1 dargestellten rotorseitigen Ende des Pitchrohrs 101 gegenüberliegende generatorseitige Ende des Pitchrohrs 101. Generatorseitig führt das Pitchrohr 101 durch ein Gehäuse 201 des Getriebes hindurch. Da sich das Pitchrohr 101 mit dem Planetenträger 103 dreht, das Gehäuse 201 aber feststeht, ist das Pitchrohr 101 in dem Gehäuse 201 mittels eines Lagers 203 drehbar gelagert. Ein Sicherungsring 205, der in dem Gehäuse 201 angebracht ist, und ein Sicherungsring 207, der auf dem Pitchrohr 101 angebracht ist, fixieren das Lager 203 in axialer Richtung. Eine Dichtung 209 verhindert, dass Öl aus dem Getriebe zwischen dem Gehäuse 201 und dem Pitchrohr 101 hindurchtreten kann.

Bei der beschriebenen Lösung werden an die Maßhaltigkeit des Pitchrohrs 101 hohe Anforderungen gestellt. Zum einen muss der zwischen dem Pitchrohr 101 und dem Anschlussstück 105 verlaufende Spalt sehr schmal sein. Andernfalls wäre die Dichtwirkung der O-Ringe 111 mangelhaft, so dass durch den Spalt Öl aus dem Getriebe austreten könnte. Andererseits dient das Pitchrohr 101 an seinem generatorseitigen Ende als Lagersitz. Daher muss der Außendurchmesser des Pitchrohrs an dieser Stelle möglichst genau ein für den Lagersitz erforderliches Übermaß zu dem Durchmesser des inneren Lagerrings einhalten.

Mit dem Pitchrohr 101 rotieren auch die in dem Pitchrohr 101 verlegten elektrischen Leitungen. Daher ist eine Kupplung erforderlich, um generatorseitig drehfest verlegte Leitungen mit den rotierenden Leitungen in dem Pitchrohr 101 zu verbinden. Das Pitchrohr 101 muss daher generatorseitig so ausgebildet sein, dass es mit der Kupplung verbunden werden kann. Auch muss der generatorseitige Anschluss in der Regel Spezifikationen entsprechen, die der Anlagenhersteller vorgibt.

Die Druckschrift DE 10 2010 060 147 A1 offenbart ein Planetengetriebe für eine Windkraftanlage. Das Planetengetriebe weist einen Zentralverteiler zur Förderung von Schmierstoff auf, der sich innerhalb des Getriebegehäuses erstreckt und als doppelwandiger Ringkanal ausgeführt ist. Durch das Innere des Ringkanals können Kabel hindurchgeführt werden.

Aus der Druckschrift CH 666 106 A5 ist eine Rohrverbindung bekannt, die einen mittels eines Klemmkörpers radial gegen das Rohr verspannbaren Klemmring und einen in einer Ausnehmung angeordneten Dichtungskörper aufweist.

Aufgabe der Erfindung ist es, unter Vermeidung der den aus dem Stand der Technik bekannten Lösungen innewohnenden Nachteilen ein Pitchrohr in ein Getriebe einer Windkraftanlage zu integrieren. Insbesondere sollen die Kosten des Pitchrohrs und der zur Herstellung des Pitchrohrs erforderliche Aufwand reduziert werden.

Diese Aufgabe wird durch ein Anschlussstück für ein Pitchrohr einer Windkraftanlage mit den Merkmalen von Anspruch 1 gelöst.

Das erfindungsgemäße Anschlussstück weist eine Aufnahme auf, in die das Pitchrohr mindestens teilweise eingeführt werden kann. Dies schließt nicht aus, dass das Pitchrohr durch die Aufnahme hindurchgeführt werden kann. Vorzugsweise ist die Aufnahme aber so ausgebildet, dass sich eine Mündung des Pitchrohrs im Inneren des Anschlussstücks befindet, wenn das Pitchrohr in die Aufnahme eingeführt wurde. Da das Pitchrohr in der Regel die Form eines geraden kreisförmigen Hohlzylinders hat, ist vorzugsweise auch die Aufnahme zylinderförmig ausgeführt, d.h. umschließt einen geraden kreisförmigen Zylinder.

Erfindungsgemäß ist das Anschlussstück mindestens zweistückig ausgeführt. Dabei bildet ein erster Teil des Anschlussstücks ein erstes der mindestens zwei Stücke, ein zweiter Teil des Anschlussstücks ein zweites der mindestens zwei Stücke. Der erste Teil und der zweite Teil bilden separate bzw. voneinander getrennte Stücke des Anschlussstücks.

Der erste Teil weist eine erste, mindestens teilweise kreisringförmige Dichtfläche auf. Entsprechend weist der zweite Teil eine zweite, mindestens teilweise kreisringförmige Dichtfläche auf. Die erste Dichtfläche und die zweite Dichtfläche weisen also jeweils mindestens eine Teilfläche auf, die kreisringförmig verläuft. Die beiden Teilflächen sind als Kontaktflächen für eine Dichtung vorgesehen.

Bevorzugt sind die beiden Teilflächen radial ausgerichtet, das heißt verlaufen jeweils in einer radial, das heißt orthogonal zu einer Drehachse, ausgerichteten Ebene. Weiterhin bevorzugt wird eine zu der Drehachse koaxialer Anordnung der beiden Teilflächen. Die beiden Teilflächen sind also rotationssymmetrisch um eine Symmetrieachse, die entlang der Drehachse verläuft, das heißt die identisch mit der Drehachse ist.

Bei der Drehachse handelt es sich vorzugsweise um die Drehachse des Pitchrohrs. Diese ist vorzugsweise identisch mit der Drehachse eines Planetenträgers und/oder der Drehachse eines Rotors der Windkraftanlage, der insbesondere drehfest mit dem Planetenträger verbunden sein kann.

Die erste Dichtfläche und die zweite Dichtfläche sind so angeordnet, dass sie mit einem Teil der Oberfläche, insbesondere der Mantelfläche, des Pitchrohrs mindestens einen Teil einer Begrenzungsfläche eines Hohlraums bilden, wenn das Pitchrohr in die Aufnahme eingeführt wurde und sich in der Aufnahme befindet. Der Hohlraum ist dazu vorgesehen, die Dichtung aufzunehmen. Begrenzt wird der Hohlraum mindestens von der ersten Dichtfläche, der zweiten Dichtfläche und dem obengenannten Teil der Oberfläche des Pitchrohrs. Die erste Dichtfläche und die zweite Dichtfläche sind Teil einer koaxial zu der Drehachse innerhalb der Aufnahme verlaufenden Vertiefung bzw. Aussparung bzw. Rinne bzw. Nut. In diese Vertiefung kann die Dichtung eingebracht werden. Wird das Pitchrohr in die Aufnahme eingeführt, verläuft der Teil der Oberfläche des Pitchrohrs entlang der Mündung der Vertiefung und schließt somit die Vertiefung ab, so dass der Hohlraum gebildet wird.

Das Anschlussstück umfasst mindestens ein Mittel, um die erste Dichtfläche und die zweite Dichtfläche gegeneinander bzw. gegen die Dichtung zu verspannen. Insbesondere dient das Mittel dazu, die erste Dichtfläche und die zweite Dichtfläche in axialer Richtung, das heißt in Richtung der Drehachse, gegeneinander zu verschieben.

Zur Montage des Anschlussstücks auf dem Pitchrohr wird zunächst die Dichtung zwischen die erste Dichtfläche und die zweite Dichtfläche, das heißt in die Vertiefung, eingebracht. Darauffolgend wird das Anschlussstück in die Aufnahme eingeführt. Durch das Mittel können nun die erste Dichtfläche und die zweite Dichtfläche so zueinander hin verschoben werden, dass sich der Abstand zwischen der ersten Dichtfläche und der zweiten Dichtfläche verringert. Dies führt dazu, dass die erste Dichtfläche und die zweite Dichtfläche sich gegen die Dichtung verspannen. Dies wiederum führt zu einer Verformung der Dichtung in radialer Richtung, insbesondere nach innen hin. Die Dichtung wird somit gegen das Pitchrohr gedrückt. Dabei tritt die Dichtung mit dem Pitchrohr entlang einer koaxial zu der Drehachse verlaufenden Fläche in Kontakt. Hierdurch erfolgt eine Abdichtung des Anschlussstücks gegenüber dem Pitchrohr, so dass kein Öl zwischen dem Anschlussstück und dem Pitchrohr hindurchtreten kann. Zudem wird das Pitchrohr in dem Anschlussstück gegenüber einer Verschiebung in axialer Richtung, das heißt in Richtung der Drehachse, fixiert.

Das erfindungsgemäße Anschlussstück ermöglicht die Verwendung eines nahezu beliebigen Pitchrohrs, da durch die beschriebene Verformung der Dichtung vergleichsweise große Maßtoleranzen des Pitchrohrs ausgeglichen werden können. Insbesondere kann ein Pitchrohr aus Kunststoff wie etwa PVC-C oder einem glasfaserverstärkten Epoxidharz verwendet werden. Auch kann das Pitchrohr aus beschichtetem Metall bestehen.

In einer bevorzugten Weiterbildung der Erfindung bilden der Rotor und/oder die Rotorwelle und/oder der Planetenträger den ersten Teil des Anschlussstücks. Dies bedeutet, dass der Rotor und/oder die Rotorwelle und/oder der Planetenträger den ersten Teil des Anschlussstücks umfassen. Der erste Teil des Anschlussstücks ist also Teil des Rotors und/oder der Rotorwelle und/oder des Planetenträgers. Insbesondere können dabei der Rotor und/oder die Rotorwelle und/oder der Planetenträgers einstückig einstückig ausgeführt sein. Durch diese Integration des ersten Teils in den Rotor und/oder die Rotorwelle und/oder den Planetenträger verringern sich die Anzahl der Teile des Getriebes und damit dessen Herstellungskosten.

In einer darüber hinaus bevorzugten Weiterbildung weist der zweite Teil des Anschlussstücks einen Flansch auf. Mit diesem kann der zweite Teil auf den ersten Teil aufgeschraubt werden. Hierdurch reduziert sich der Abstand zwischen der ersten Dichtfläche und der zweiten Dichtfläche, so dass die erste Dichtfläche und die zweite Dichtfläche zueinander hin verschoben werden und sich gegen die Dichtung verspannen.

Insbesondere ist der Flansch mit Bohrungen versehen, durch die Schrauben geführt werden können. Entsprechend weist der zweite Teil Gewindebohrungen zur Aufnahme der Schrauben auf. Ein zweiter, mit einem Flansch versehener Teil des Anschlussstücks ist insbesondere für die rotorseitige Aufnahme des Pitchrohrs geeignet. Dabei wird der Flansch bevorzugt mit dem Rotor, der Rotorwelle oder dem Planetenträger verschraubt, wobei der Rotor und/oder die Rotorwelle und/oder der Planetenträger den ersten Teil des Anschlussstücks bilden.

Anstelle des Flansches dient in einer weiterhin bevorzugten Weiterbildung eine Gewindepaarung dazu, den Abstand zwischen der ersten Dichtfläche und der zweiten Dichtfläche zu verändern. Der erste Teil des Anschlussstücks weist dabei ein erstes Gewinde der Gewindepaarung auf. Der zweite Teil des Anschlussstücks weist entsprechend ein zweites Gewinde der Gewindepaarung auf. Durch Verdrehen des ersten Gewindes gegenüber dem zweiten Gewinde verändert sich der Abstand zwischen der ersten Dichtfläche und der zweiten Dichtfläche. Wird das erste Gewinde in das zweite Gewinde beziehungsweise das zweite Gewinde in das erste Gewinde eingeschraubt, werden somit die erste Dichtfläche und die zweite Dichtfläche gegen die Dichtung verspannt.

Besonders bevorzugt, insbesondere für die generatorseitige Aufnahme des Pitchrohrs, wird eine Weiterbildung mit einem ersten Teil des Anschlussstücks, der einen Lagersitz oder eine Lagerlauffläche bildet. Der Lagersitz dient der Aufnahme eines Lagers, insbesondere eines Innenrings des Lagers. Das Lager kann also mit seinem Innenring auf den Lagersitz aufgeschoben werden. Dabei dient der Lagersitz dazu, das Lager in radialer Richtung zu fixieren. Zur Fixierung des Lagers beziehungsweise seines Innenrings in axialer Richtung kann das Anschlussstück mindestens eine Nut aufweisen, in die ein Sicherungsring eingebracht wird.

Der Innenring des Lagers und der erste Teil des Anschlussstücks können einstückig ausgeführt sein. Das bedeutet, dass der erste Teil des Anschlussstücks die Lagerlauffläche bildet. In diesem Fall handelt es sich bei dem Lager bevorzugt um ein Gleitlager. Aber auch eine einstückige Ausführung des ersten Teils des Anschlussstücks mit dem Innenring eines Wälzlagers ist möglich.

Das Lager dient dazu, das Pitchrohr gegenüber einem feststehenden Getriebeteil abzustützen. Der Außenring des Lagers wird dabei in dem Getriebeteil angebracht. Insbesondere kann es sich bei dem feststehenden Getriebeteil um ein Gehäuse des Getriebes handeln.

Bei den aus dem Stand der Technik bekannten Lösungen weist das Pitchrohr den Lagersitz auf. In diesem Bereich werden aber besondere Anforderungen sowohl an die Maßhaltigkeit, als auch an die Belastbarkeit gestellt. Infolge der Verlagerung des Lagersitzes beziehungsweise der Lagerlauffläche in den ersten Teil des Anschlussstücks muss das Pitchrohr diese Anforderungen nicht mehr erfüllen und kann somit großzügiger toleriert werden.

Weiterhin bevorzugt wird ein Anschlussstück mit einem ersten und/oder einem zweiten Teil, die eine Kupplung zum Anschluss mindestens einer elektrischen Leitung und/oder mindestens einer Schmierstoffleitung aufweisen. Die Kupplung ist also Teil des ersten Teils und/oder des zweiten Teils des Anschlussstücks. Insbesondere können der erste Teil und/oder der zweite Teil einstückig mit der Kupplung verbunden sein. Hierdurch entfällt die Notwendigkeit, eine separate Kupplung vorzusehen und diese aufwändig an dem Pitchrohr befestigen zu müssen.

Die Fig. 1 und 2 geben aus dem Stand der Technik bekannte Lösungen wieder. Ausführungsbeispiele der Erfindung, die im Folgenden näher erläutert werden, sind in den Fig. 3 bis 7 dargestellt. Dabei kennzeichnen übereinstimmende Bezugszeichen gleiche oder funktionsgleiche Merkmale. Im Einzelnen zeigt
- Fig. 1: ein aus dem Stand der Technik bekanntes rotorseitiges Anschlussstück;
- Fig. 2: ein aus dem Stand der Technik bekanntes generatorseitiges Anschlussstück;

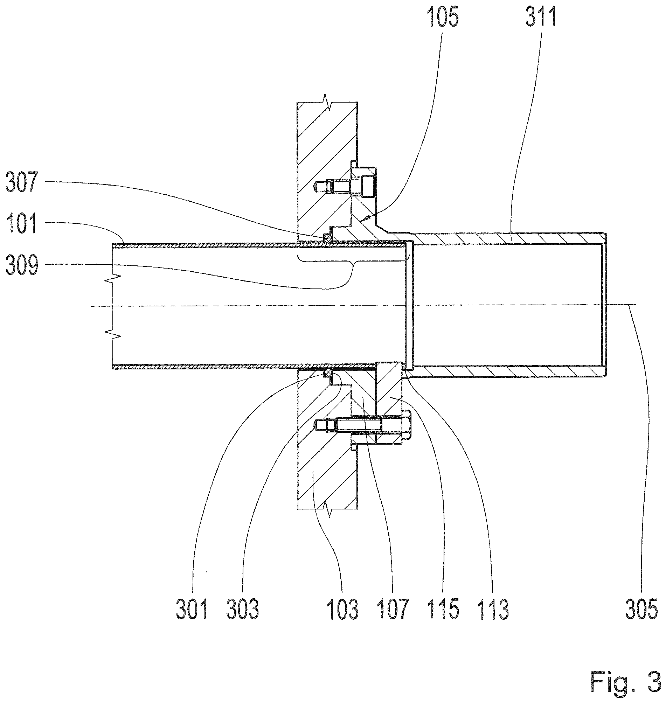

- Fig. 3: ein rotorseitiges Anschlussstück mit verspannbarem O-Ring;

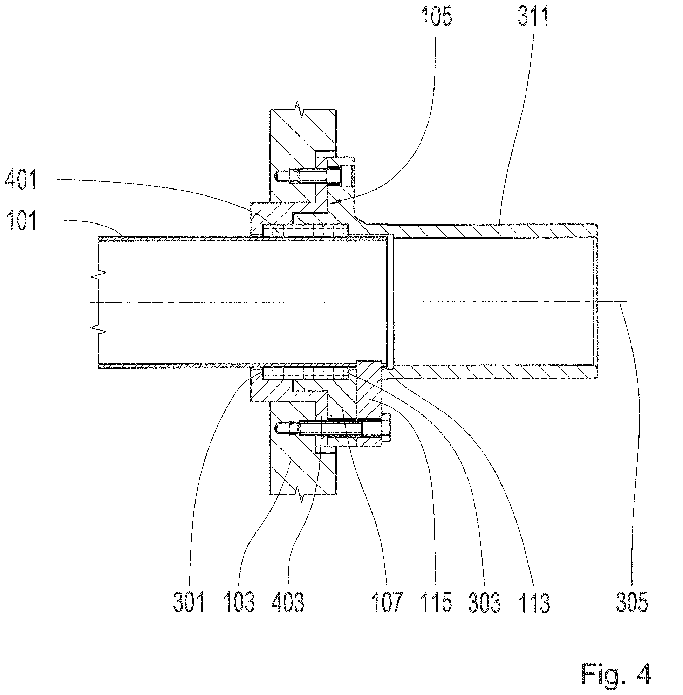

- Fig. 4: ein rotorseitiges Anschlussstück mit verspannbarem Dichtungsschlauch;

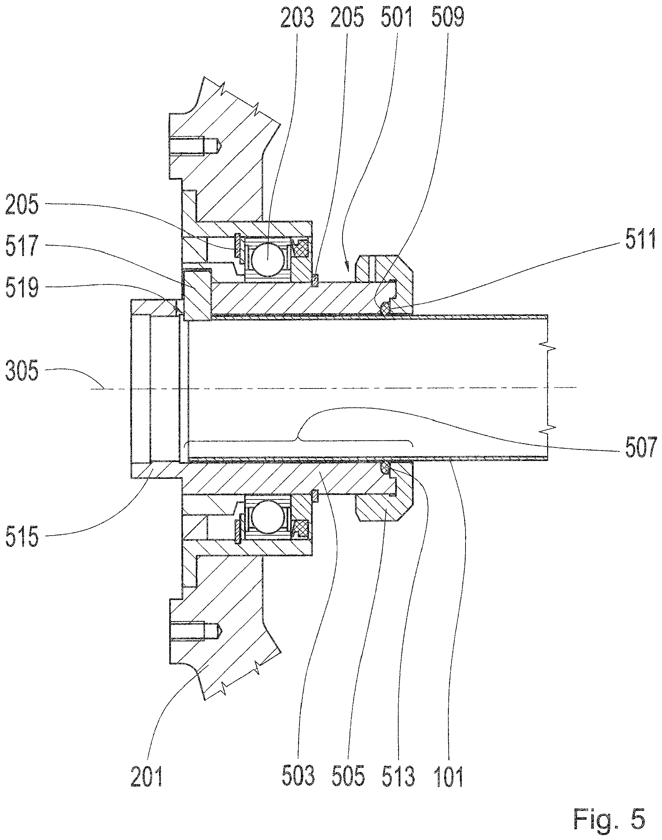

- Fig. 5: ein generatorseitiges Anschlussstück mit verspannbarem O-Ring;

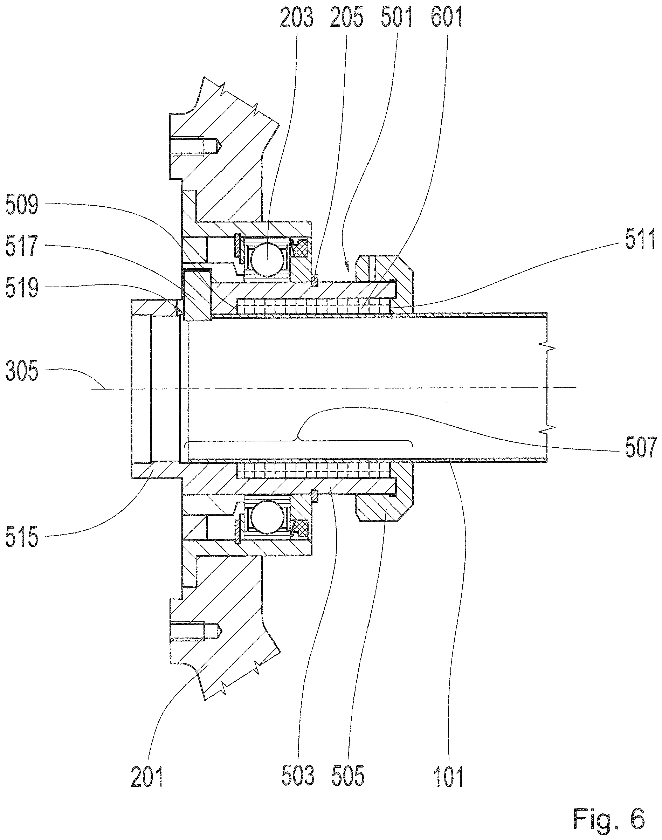

- Fig. 6: ein generatorseitiges Anschlussstück mit verspannbarem Dichtungsschlauch; und

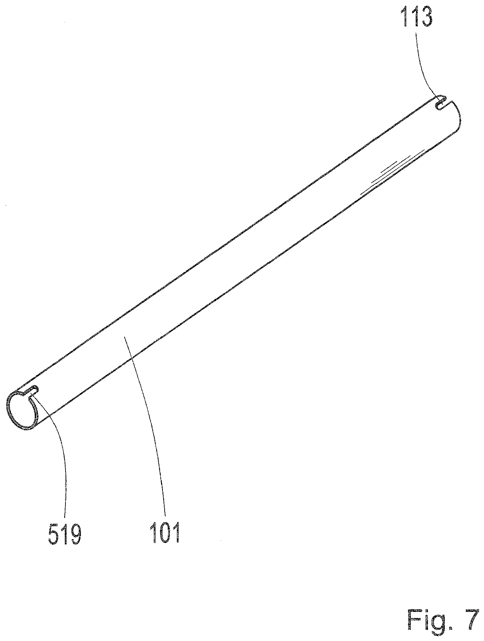

- Fig. 7: ein Pitchrohr.

Gemäß Fig. 3 ist das Anschlussstück 105 zweiteilig ausgeführt. Einen ersten Teil des Anschlussstücks 105 bildet der Planetenträger 103. Der Flansch 107 bildet einen zweiten Teil des Anschlussstücks 105. Im Unterschied zu der in Fig. 1 dargestellten Lösung weist das Anschlussstück 105 keine Nut 109 zur Aufnahme eines Dichtungselements auf. Stattdessen bilden der Planetenträger 103 und der Flansch 107 jeweils eine kreisringförmige radial ausgerichtete Dichtfläche 301, 303 aus. Die Dichtflächen 301, 303 sind einander zugewandt und bilden einen rotationssymmetrisch um eine Drehachse 305 verlaufenden Spalt. In diesem Spalt befindet sich ein O-Ring 307.

Das Pitchrohr 101 kann in einen als Aufnahme 309 ausgebildeten Bereich des Anschlussstücks 105 eingeführt werden. Die Dichtflächen 301, 303 sind so angeordnet, dass der O-Ring 307 mit den Dichtflächen 301, 303 und dem in die Aufnahme 309 eingeführten Pitchrohr 101 in Kontakt steht. Der O-Ring 307 dichtet also die Dichtflächen 301, 303 und damit den Planetenträger 103 beziehungsweise das Anschlussstück 105 gegenüber dem Pitchrohr 101 ab. Somit verhindert der O-Ring 307, das Öl zwischen dem Pitchrohr 101 und dem Planetenträger 103 beziehungsweise dem Anschlussstück 105 hindurchtreten kann. Insbesondere verhindert der O-Ring 307, dass Öl ins Innere des Pitchrohrs 101 gelangt.

Der Flansch 107 weist Durchgangsbohrungen auf. Entsprechende Gewindebohrungen befinden sich in dem Planetenträger 103, so dass der Flansch 107 auf den Planetenträger 103 aufgeschraubt werden kann. Dabei verringert sich der Abstand zwischen den Dichtflächen 301, 303. Dies wiederum hat zur Folge, dass sich der O-Ring 307 verformt. Der O-Ring 307 wird von den Dichtflächen 301, 303 zusammengedrückt.

Infolge der Verformung übt der O-Ring 307 entlang einer in Umfangsrichtung des Pitchrohrs 101 verlaufenden Fläche einen Druck auf das Pitchrohr 101 auf. Hierdurch wird das Pitchrohr 101 in dem Anschlussstück 105 fixiert. Weiterhin gleicht die Verformung des O-Rings 307 Maßabweichungen des Pitchrohrs 101.

Eine Kupplung 311 dient dazu, elektrische Leitungen, die durch das Pitchrohr 101 verlaufen, mit elektrischen Leitungen zu verbinden, die innerhalb des Rotors verlegt sind. Die Kupplung 301 ist einstückig mit dem Flansch 107 verbunden.

Fig. 4 zeigt eine Variante des Ausführungsbeispiels aus Fig. 3, bei der statt des O-Rings 307 ein Dichtungsschlauch 401 verwendet wird. Der Dichtungsschlauch 401 hat die Form eines Hohlzylinders. Ebenfalls hohlzylinderförmig ausgebildet ist entsprechend der Spalt zwischen den Dichtungsflächen 301, 303. Im Querschnitt haben Dichtungsschlauch 401 und der Spalt die Form eines Rechtecks.

Der Dichtungsschlauch 401 überragt in axialer Richtung den Planetenträger 103. Statt des Planetenträgers 103 bildet deshalb ein Zwischenstück 403 den ersten Teil des Anschlussstücks 105. Zusammen mit dem Flansch 107 und der Kupplung 311, die den zweiten Teil des Anschlussstücks 105 bilden, ist das Zwischenstück 403 auf den Planetenträger 103 aufgeschraubt. Dies ermöglicht es, analog zu der in Fig. 3 dargestellten Variante, den Abstand zwischen den Dichtflächen 301, 303 zu verringern und so den Dichtungsschlauch 401 zu verformen.

Ein Anschlussstück 501 als generatorseitiges Pendant zu dem Anschlussstück 105 aus Fig. 3 stellt Fig. 5 dar. Das Anschlussstück 501 umfasst eine Hülse 503 und eine Überwurfmutter 505. Die Hülse 503 ist mit einer Aufnahme 507 versehen, in die das Pitchrohr 101 eingeführt werden kann. Die Hülse 503 und die Überwurfmutter 505 weisen jeweils eine radial ausgerichtete kreisringförmige Dichtfläche 509, 511 auf.

Zwischen den Dichtflächen 509, 511 verläuft ein Spalt, der zu der Drehachse 305 rotationssymmetrisch ist. Dieser Spalt dient der Aufnahme eines O-Rings 513.

Wenn die Überwurfmutter 505 auf die Hülse 503 aufgeschraubt wird, verringert sich der Abstand der beiden Dichtflächen 509, 511 zueinander. Infolgedessen verkleinert sich der Spalt, so dass der O-Ring 513 verformt und gegen das Pitchrohr 101 gedrückt wird.

Die Hülse 503 ist einstückig mit einer generatorseitigen Kupplung 515 verbunden. Die Kupplung 515 dient dazu, generatorseitig angeordnete elektrische Leitungen mit den durch das Pitchrohr 101 hindurchführenden elektrischen Leitungen zu verbinden.

Auch generatorseitig ist eine Sicherungslasche 517 angeordnet. Diese ist in der Hülse 503 fixiert und greift in eine generatorseitige Nut 519 des Pitchrohrs 101 ein. Auf diese Weise wird das generatorseitige Anschlussstück 501 drehfest mit dem Pitchrohr 101 gekoppelt.

Um das Pitchrohr 101 mit dem generatorseitigen Anschlussstück 501 drehbar in dem Getriebegehäuse 201 zu lagern, eignen sich aus dem Stand der Technik bekannte Lagerungskonzepte, etwa das in Fig. 2 dargestellte Lagerungskonzept. Allerdings ist gemäß Fig. 5 die Lagerung, insbesondere das Lager 203, mit dem zugehörigen Sicherungsring 205 nicht direkt auf dem Pitchrohr 101 angebracht, sondern auf der Hülse 503. Der Außendurchmesser des Pitchrohrs 101 muss also nicht dem Innendurchmesser des Lagers 203 entsprechen. Die durch die Lagerung gestellten Anforderungen an die Fertigungsgüte, insbesondere an die Fertigungstoleranzen, müssen hier also nicht von dem Pitchrohr 101 erfüllt werden, sondern lediglich von der Hülse 503.

Eine Variante des Anschlussstücks 501 stellt Fig. 6 dar. Im Gegensatz zu dem Anschlussstück 501 aus Fig. 5, das als Dichtung einen O-Ring 513 aufweist, umfasst das Anschlussstück 501 gemäß Fig. 6 einen Dichtungsschlauch 601. Dieser wird anstelle des O-Rings 513 in den von den Dichtflächen 509, 511 gebildeten Spalt eingebracht. Der Spalt ist entsprechend hohlzylinderförmig ausgeführt beziehungsweise rotationssymmetrisch um die Drehachse 305 mit einem rechteckigen Querschnitt.

Das Pitchrohr 101 mit der rotorseitigen Nut 113 und der generatorseitigen Nut 519 stellt Fig. 7 dar.

### Bezugszeichen

- 101: Pitchrohr
- 103: Planetenträger
- 105: Anschlussstück
- 107: Flansch
- 109: Nut
- 111: O-Ring
- 113: Aussparung
- 115: Sicherungslasche
- 201: Gehäuse
- 203: Lager
- 205: Sicherungsring
- 207: Sicherungsring
- 209: Dichtung
- 301: Dichtfläche
- 303: Dichtfläche
- 305: Drehachse
- 309: Aufnahme
- 307: O-Ring
- 311: Kupplung
- 401: Dichtungsschlauch
- 403: Zwischenstück
- 501: Anschlussstück
- 503: Hülse
- 505: Überwurfmutter
- 507: Aufnahme
- 509: Dichtfläche
- 511: Dichtfläche
- 513: O-Ring
- 515: Kupplung
- 517: Sicherungslasch
- 601: Dichtungsschlauch

## Patentansprüche

1. Anschlussstück (105, 501) für ein Pitchrohr (101) einer Windkraftanlage, wobei
das Anschlussstück (105, 501) eine Aufnahme (309, 507) aufweist, in die das Pitchrohr (101) mindestens teilweise eingeführt werden kann; wobei
das Anschlussstück (105, 501) mindestens zweistückig, mit einem ersten Teil (103, 503) und einem zweiten Teil (107, 311, 505), ausgeführt ist; wobei der erste Teil (103, 503) eine erste, mindestens teilweise kreisringförmige Dichtfläche (301, 509) aufweist; wobei
der zweite Teil (107, 311, 505) eine zweite, mindestens teilweise kreisringförmige Dichtfläche (303, 511) aufweist; und wobei
die erste Dichtfläche (301, 509) und die zweite Dichtfläche (303, 511) mit einem Teil der Oberfläche des Pitchrohrs (101) mindestens einen Teil einer Begrenzungsfläche eines Hohlraums zur Aufnahme einer Dichtung (307, 401, 513, 601) bilden, wenn das Pitchrohr (101) in die Aufnahme (309, 507) eingeführt wurde; **gekennzeichnet durch**
mindestens eine Mittel zum Verändern des Abstands zwischen der ersten Dichtfläche (301, 509) und der zweite Dichtfläche (303, 511); wobei
ein Rotor und/oder eine Rotorwelle und/oder ein Planetenträger (103) der Windkraftanlage den ersten Teil des Anschlussstücks (105) bildet.

2. Anschlussstück (105) nach Anspruch 1, **dadurch gekennzeichnet, dass**
der zweite Teil (107, 311) des Anschlussstücks (105) einen Flansch (107) aufweist, mit dem der zweite Teil (107, 311) auf den ersten Teil (103) aufgeschraubt werden kann, sodass die erste Dichtfläche (301, 509) und die zweite Dichtfläche (303, 511) gegen die Dichtung (307, 401) verspannt werden können.

3. Anschlussstück (501) nach Anspruch 1, **dadurch gekennzeichnet, dass**
der erste Teil (503) des Anschlussstücks (501) ein erstes Gewinde und der zweite Teil (505) des Anschlussstücks (501) ein zweites Gewinde aufweist, wobei der Abstand zwischen der ersten Dichtfläche (509) und der zweite Dichtfläche (511) verändert werden kann, indem das erste Gewinde und das zweite Gewinde miteinander verschraubt werden.

4. Anschlussstück (501) nach einem der vorhergehenden Ansprüche, **dadurch gekennzeichnet, dass**
der erste Teil (503) des Anschlussstücks (501) einen Lagersitz oder eine Lagerlauffläche bildet.

5. Anschlussstück (105, 501) nach einem der vorhergehenden Ansprüche, **dadurch gekennzeichnet, dass**
der erste Teil (103, 503) und/oder der zweite Teil (107, 311, 505) des Anschlussstücks eine Kupplung (311, 515) zum Anschluss mindestens einer elektrischen Leitung und/oder mindestens einer Schmierstoffleitung aufweist.

## Claims

1. Connection piece (105, 501) for a pitch tube (101) of a wind turbine, the connection piece (105, 501) having a receptacle (309, 507) into which the pitch tube (101) can be at least partly inserted;
the connection piece (105, 501) being formed in at least two pieces, comprising a first part (103, 503) and a second part (107, 311, 505);
the first part (103, 503) having a first at least partly annular sealing surface (301, 509); and
the second part (107, 311, 505) having a second at least partly annular sealing surface (303, 511); and
the first sealing surface (301, 509) and the second sealing surface (303, 509), together with a part of the surface of the pitch tube (101), forming at least one part of a surface that delimits a hollow space for receiving a seal (307, 401, 513, 601) when the pitch tube (101) has been inserted into the receptacle (309, 507);
**characterized by**
at least one means for varying the distance between the first sealing surface (301, 509) and the second sealing surface (303, 511); wherein
a rotor and/or a rotor shaft and/or a planet carrier (103) of the wind turbine forms the first part of the connection piece (105).

2. Connection piece (105) according to Claim 1,
**characterized in that**
the second part (107, 311) of the connection piece (105) has a flange (107), with which the second part (107, 311) can be screwed onto the first part (103), so that the first sealing surface (301, 509) and the second sealing surface (303, 511) can be braced against the seal (307, 401).

3. Connection piece (501) according to Claim 1,
**characterized in that**
the first part (503) of the connection piece (501 has a first thread and the second part (505) of the connection piece (501) has a second thread, wherein the distance between the first sealing surface (509) and the second sealing surface (511) can be varied by the first thread and the second thread being screwed together.

4. Connection piece (501) according to one of the preceding claims, **characterized in that** the first part (503) of the connection piece (501) forms a bearing seat or a bearing surface.

5. Connection piece (105, 501) according to one of the preceding claims, **characterized in that** the first part (103, 503) and/or the second part (107, 311, 505) of the connection piece has a coupling (311, 515) for the connection of at least one electric lead and/or at least one lubricant line.

## Revendications

1. Pièce de raccordement (105, 501) pour un tube de réglage du pas (101) d'un aérogénérateur, la pièce de raccordement (105, 501) possédant un logement (309, 507) dans lequel le tube de réglage du pas (101) peut être introduit au moins partiellement ;
la pièce de raccordement (105, 501) étant réalisée en au moins deux parties, comprenant une première partie (103, 503) et une deuxième partie (107, 311, 505) ;
la première partie (103, 503) possédant une première surface d'étanchéité (301, 509) au moins partiellement en forme de couronne torique ;
la deuxième partie (107, 311, 505) possédant une deuxième surface d'étanchéité (303, 511) au moins partiellement en forme de couronne torique ; et
la première surface d'étanchéité (301, 509) et la deuxième surface d'étanchéité (303, 511) formant, avec une partie de la surface du tube de réglage du pas (101), au moins une partie de la surface de délimitation d'un espace creux destiné à accueillir une garniture d'étanchéité (307, 401, 513, 601) lorsque le tube de réglage du pas (101) a été introduit dans le logement (309, 507) ; **caractérisée par**
au moins un moyen servant à modifier l'écart entre la première surface d'étanchéité (301, 509) et la deuxième surface d'étanchéité (303, 511) ;
un rotor et/ou un arbre de rotor et/ou une cage de transmission planétaire (103) de l'aérogénérateur formant la première partie de la pièce de raccordement (105) .

2. Pièce de raccordement (105) selon la revendication 1, **caractérisée en ce que** la deuxième partie (107, 311) de la pièce de raccordement (105) possède une bride (107) avec laquelle la deuxième partie (107, 311) peut être vissée sur la première partie (103), de sorte que la première surface d'étanchéité (301, 509) et la deuxième surface d'étanchéité (303, 511) peuvent être serrées contre la garniture d'étanchéité (307, 401).

3. Pièce de raccordement (501) selon la revendication 1, **caractérisée en ce que** la première partie (503) de la pièce de raccordement (501) possède un premier filet et la deuxième partie (505) de la pièce de raccordement (501) possède un deuxième filet, l'écart entre la première surface d'étanchéité (509) et la deuxième surface d'étanchéité (511) pouvant être modifié en vissant le premier filet et le deuxième filet l'un avec l'autre.

4. Pièce de raccordement (501) selon l'une des revendications précédentes, **caractérisée en ce que** la première partie (503) de la pièce de raccordement (501) forme un siège de palier ou une surface de roulement de palier.

5. Pièce de raccordement (105, 501) selon l'une des revendications précédentes, **caractérisée en ce que** la première partie (103, 503) et/ou la deuxième partie (107, 311, 505) de la pièce de raccordement possède un coupleur (311, 515) destiné au raccordement d'au moins un câble électrique et/ou d'au moins une conduite de lubrifiant.
